# EUROPEAN PATENT APPLICATION

(11) **EP 4 769 224 A1**
(43) Date of publication of application: **01.07.2026**
(21) Application number: 24223607.3
(22) Date of filing: 30.12.2024
(51) Int. Cl.: G06N 3/049, G06N 3/045, G06N 3/088, G06N 3/044, G06N 3/0464, G06N 3/0499

(54) **METHODS FOR ENCODING AND DECODING DATA FROM ARRAY-BASED SENSING SYSTEMS**

(71) Applicant: Stichting IMEC Nederland, 5656 AE Eindhoven (NL)
(72) Inventor: Liaw, Hua-Peng, 5038 VZ Tilburg (NL); He, Yuming, 5623 EN Eindhoven (NL); Tang, Guangzhi, 5591 DZ Heeze (NL); Liu, Yao-Hong, 5655 JV Eindhoven (NL); Gandham, Venkata Sai Lohit, 2625 PJ Delft (NL)
(74) Representative: Patent Department IMEC

(57) **Abstract**

Example embodiments describe a computer-implemented methods for training a spiking neural network for encoding and decoding event information obtained from a set of sensors in an array-based sensing system. Further embodiments describe a neural network training system as well as a sensor and an edge gateway device employing such encoding and decoding spiking neural networks.

## Description

### Technical Field

The present disclosure relates to encoding and decoding of information from sensors by means of neural networks. More specifically, various example embodiments of the present disclosure relate to methods, devices, and a system for training spiking neural networks, SNN, for encoding and decoding such information.

### Background

Array-based sensing systems, which may for instance be used in imaging or in detecting electrical signals, are becoming increasingly popular in a variety of applications. There is an increasing demand for more detailed information, corresponding to increasing number of channels in the array-based sensing systems and increasing resolution of information. Nowadays, array-based sensing systems may generate information larger than 1 Gbps, which drastically increases the power consumption required not only for information capturing, but also for storage, processing, and transmission.

Further, such array-based sensing systems may be intended to be used in a remote location for collecting information in a location which may be hard to access. Thus, it is desired that the array-based sensing systems can be deployed without need of maintenance for a very long time. Further, it is desired that the array-based sensing systems have a long lifetime and a long battery time and so the power consumption of the array-based sensing systems is even more critical. For example, array-based systems may be used in implanted devices for sensing biological signals which wherein handling of more than 1 Gbps of information in addition to a long lifetime and a long battery time is crucial.

Furthermore, for array-based sensing systems used as implantable devices, the low power consumption is not only critical for long lifetime and a battery time, but also because the device should ensure low operational temperature below 40 mW/cm² heat flux and 1°C in order to maintain long-term tissue health and to prevent tissue damage from heat diffusion.

As one of the major contributions of power consumption in array-based sensing system is the data transfer or communication, there is a need for efficient lossless or low-loss encoding and decoding of information.

### Summary

An objective of the present disclosure is to provide efficient encoding and decoding of information for array-based sensing systems to ensure low power consumption to ensure long lifetime. It is a further objective of the present disclosure to provide an efficient lossless or low-loss encoding of information for such sensing systems to ensure a low heat dissipation to maintain long term tissue health and to prevent tissue damage from heat dissipation.

Data compression is the process of encoding information using fewer bits than its original format. Since most real-world data is not uniformly distributed, conventional data compression algorithms analyse the raw data to capture its underlying statistical distribution and then encode the raw data using an encoding dictionary, such as Huffman coding, or a drop/quantize strategy, e.g., JPEG, to reduce data size. These approaches, however, are content-dependent or content-aware and thus not suitable for array-based sensing systems where the underlying statistical distribution of the raw data is unknown or unavailable. Further, when developing a data compression solution, there are three factors that need to be taken into account which are the required compression ratio, the algorithm and/or hardware complexity, and the computational resources. These factors are co-dependent and conflicting making the conventional compression solutions not suitable for such array-based sensing systems.

These and other objectives are at least partly met by the invention as defined in the independent claims. Preferred embodiments are set out in the dependent claims. The embodiments and features described in this specification that do not fall within the scope of the independent claims, if any, are to be interpreted as examples useful for understanding various embodiments of the invention.

According to a first example aspect of the present disclosure, there is provided a computer-implemented method for training a learning model for encoding event information by means of a learning system comprising a spiking neural network, SNN, comprising: obtaining event information characterizing one or more events each corresponding to a change in a value of a sensor from a set of sensors; deriving encoded representation from the obtained event information by means of an encoder-decoder neural network; and training the SNN for encoding the event information by means of the obtained event information and the derived encoded representation.

In other words, the SNN is not trained by means of the event information only, but also by means of the encoded representation. In other words, the encoder-decoder neural network and the SNN are employed in a teacher-student configuration. The use of a teacher-student architecture allows benefiting from the capabilities of a more complex, teacher network, i.e., the encoder-decoder neural network, to break down the complex transformation of the event information into several simple transformations to easily train a much simpler student network, even with limited learning capability, i.e., the SNN, to learn those simple transformations to achieve same or similar performance as the complex teacher network. This allows to use a small, low-complexity SNN performing a lossless or low-loss compression or encoding of event information in sensor devices in array-based sensing systems where power consumption requirements are stringent. In other words, such a lightweight SNN not only offers an optimum balance between the compression ratio, algorithm/hardware complexity, and computational resources, but also break co-dependency between them. Further, training the SNN in a teacher-student configuration alleviates the need of understanding the underlying statistical distribution of the event information, thus enabling the usage of the SNN in array-based sensing systems where content-agnostic encoding or compression is also required. In other words, such a lightweight SNN capable of lossless or low-loss compression not only offers an optimum balance between the three conflicting factors, i.e., compression ratio, algorithm/hardware complexity, and computational resources, but also break the conflict cycle between performance and complexity.

According to example embodiments, the SNN comprises at least one hidden layer and wherein the SNN implements an integrate-and-fire model or a leaky integrate-and-fire model.

In other words, the SNN is flexible may implement different types of learning models, such as integrate-and-fire or a leaky integrate-and-fire models, Hodgkin-Huxley Izhikevich model or spike response model. Further, the SNN can be very lightweight as only two hidden layers are sufficient to ensure lossless or low-less encoding.

According to example embodiments, the deriving comprises training the encoder-decoder neural network using the obtained event information and wherein the encoder-decoder neural network comprises a deep neural network, dNN, such as a feedforward neural network, FNN and a convolutional neural network, CNN, or, a recursive neural network, RNN, such as a gated recurrent unit-based neural network, GRU, and a Long short-term memory, LSTM neural network.

In other words, the selection of the encoder-decoder neural network is also flexible. The selection of the encoder-decoder neural network is not critical and does not affect the complexity nor the encoding performance of the SNN, i.e., the reconstruction error and the compression ratio. This is because the reconstruction error and the compression ratio are determined by the size of the encoded representation. Therefore, these can be also easily tuned in accordance with the application requirements by simply varying the size of the encoded representation.

According to example embodiments, the method further comprises deploying the trained SNN to a sensor device and the trained decoder neural network, DNN, to an edge gateway device, wherein the deploying comprises obtaining configuration parameters characterizing the trained SNN and the trained DNN and programming a replica SNN deployed on the sensor device and a replica DNN deployed on the edge gateway device with the obtained configuration parameters.

The deploying a first portion of the trained SNN to a sensor device and a remaining portion of the trained SNN and a trained decoder neural network, DNN, to an edge gateway device, wherein the deploying comprises obtaining configuration parameters characterizing the trained SNN and the trained DNN and programming a replica of the first portion of SNN deployed on the sensor device and a replica of the remaining portion of the SNN and a replica DNN deployed on the edge gateway device with the obtained configuration parameters.

In other words, the use of SNN allows for employing distributed encoding computation. This allows for an additional degree of freedom when trading-off between computation and communication resources required by the sensor devices.

According to further example embodiments, obtaining event information characterizing one or more events each corresponding to a change in a value of a sensor from a set of sensors and inferring therefrom encoded representation by means of an SNN pre-trained by means of the method according to the first example aspect.

A computer-implemented method for training a learning model for decoding event information by means of a learning system comprising a spiking neural network, SNN, the method comprising:
- obtaining event information characterizing one or more events each corresponding to a change in a value of a sensor from a set of sensors;
- deriving encoded representation from the obtained event information by means of an encoder-decoder neural network; and
- training the SNN for decoding the encoded representation by means of the obtained encoded representation and the derived event information.

According to example embodiments, the encoder-decoder neural network and the SNN form a teacher-student neural network.

According to example embodiments, the deriving comprises training the encoder-decoder neural network using the event information, and, wherein the encoder-decoder neural network comprises a deep neural network, dNN, such as a feedforward neural network, FNN and a convolutional neural network, CNN, or, a recursive neural network, RNN, such as a gated recurrent unit-based neural network, GRU, and a Long short-term memory, LSTM neural network.

According to example embodiments, the SNN comprises at least one hidden layer and wherein the SNN implements an integrate-and-fire model or a leaky integrate-and-fire model.

According to example embodiments, the method further comprises deploying the trained SNN to an edge gateway device, wherein the deploying comprises obtaining configuration parameters characterizing the trained SNN and programming a replica SNN on the edge gateway device with the obtained configuration parameters.

According to example embodiments, a computer-implemented method is disclosed comprising obtaining encoded representation of event information characterizing one or more events each corresponding to a change in a value of a sensor from a set of sensors; and inferring therefrom the event information by means of a SNN pre-trained by means of the method according to second example aspect.

According to a third example aspect, a sensor device is disclosed comprising a spiking neural network, SNN, pre-trained according to the method of the first example aspect and configured to receive event information characterizing one or more events each corresponding to a change in a value of a sensor from the set of sensors and to infer encoded representation of received event information.

According to example embodiments, the SNN is pre-trained according to the method of the first example aspect to partly encode the received event information.

The sensor device is thus provided with a lightweight SNN pre-trained for lossless or low-less and content-agnostic compression or encoding of event information. This enables the sensor device to be used in various applications such as implantable edge device where a long lifetime, a long battery time is critical along with the computation and memory resources are limited.

Further, the various example embodiments of the first example aspect may be applied as example embodiments to the third example aspect.

According to a fourth example aspect, an edge gateway device is disclosed comprising a DNN pre-trained by means of the method according to method of the first example aspect or a SNN pre-trained by the method according to second example aspect and configured to receive encoded representation of event information characterizing one or more events each corresponding to a change in a value of a sensor from a set of sensors from and to infer the event information encoded therein.

According to example embodiments, the edge gateway device may further comprise a SNN pre-trained by means of the method according to the first example aspect and configured to receive partly encoded representation of the event information and to output the encoded representation of the event information.

In other words, by providing an edge gateway device with a lightweight SNN pre-trained for decoding the event information, the edge gateway device may offer the same advantages as the sensor device of the third example aspect.

Further, the various example embodiments of the second example aspect may be applied as example embodiments to the fourth example aspect.

According to a fifth example aspect, a neural network training system is disclosed comprising at least one processor and at least one memory including computer program code, the at least one memory and computer program code configured to, with the at least one processor, cause the neural network training system to perform the computer-implemented method according to the first example aspect or the second example aspect when the computer program code is run on the neural network training system.

According to a sixth example aspect a computer program product is disclosed comprising computer-executable instructions for causing at least one computer to perform the method according the first example aspect or the method according to the second example aspect when the program is run on the at least one computer.

According to a seventh example aspect a computer readable storage medium is disclosed comprising the computer program product according to sixth example aspect.

The various example embodiments of the first and second example aspects may be applied as example embodiments to the third and fourth example aspects.

### Brief Description of the Drawings

Some example embodiments will now be described with reference to the accompanying drawings.
FIG.1A shows a sensor device and an edge gateway device according to an example embodiment of the present disclosure;
FIG.1B shows a sensor device and an edge gateway device according to a first example embodiment of the present disclosure;
FIG.2 shows a neural network training system according to a second example embodiment of the present disclosure;
FIG.3A shows an example encoding and a decoding neural network architecture suitable for the sensor device and the edge gateway devices of FIG.1A;
FIG.3B shows an example encoding and a decoding neural network architecture suitable for the sensor device and the edge gateway devices of FIG.1B;
FIG.4 shows simulation results illustrating the compression ratio achieved with the encoding and decoding neural network architecture of FIG.3A.
FIG.5 shows an example embodiment of a suitable computing system for performing one or several steps in embodiments of the invention.

### Detailed Description of Embodiment(s)

To overcome the above challenges, the present disclosure proposes the use of a spiking neural network, SNN, for performing data compression on edge devices such as sensor devices in array-based sensing systems. The edge device here means a device that provide an entry point into a processing unit. The edge gateway device processes data from edge devices and translate signals from an edge device using different protocols and sending back relevant data. In this invention, the edge device typically comprises sensors and do simple process. The edge gateway device processes or compress data before transferring it to a more powerful system. The edge gateway device can also send weights associate to the neurons in the edge device. The SNN is trained in teacher-student configuration which allows for knowledge transfer from large, complex deep neural networks, i.e., the teacher, to a smaller, more lightweight neural networks, i.e., the students. The present disclosure further proposes the use of a SNN for decoding the compressed information thus elevating the power and complexity constraints for the edge gateway devices.

Differently for encoder-decoder neural networks which transmit information between neurons in different layers in each propagation cycle, a SNN conveys information by using discrete spikes incorporating the concept of time into its operation. Further, a SNN tends to exhibit sparse activation patterns, meaning that only a small fraction of neurons fire spikes at any given time. This sparse activation reduces the overall energy consumption of the spiking neural network by minimizing unnecessary computations and memory accesses. Despite the energy efficiency and biological plausibility, SNN has relatively weak learning capabilities compared to other network architectures. The limited learning capability hinders its ability to learn tasks requiring high-dimensional representation or fine-grained classification such as encoding or compression of event information obtained from edge deployed infrastructure.

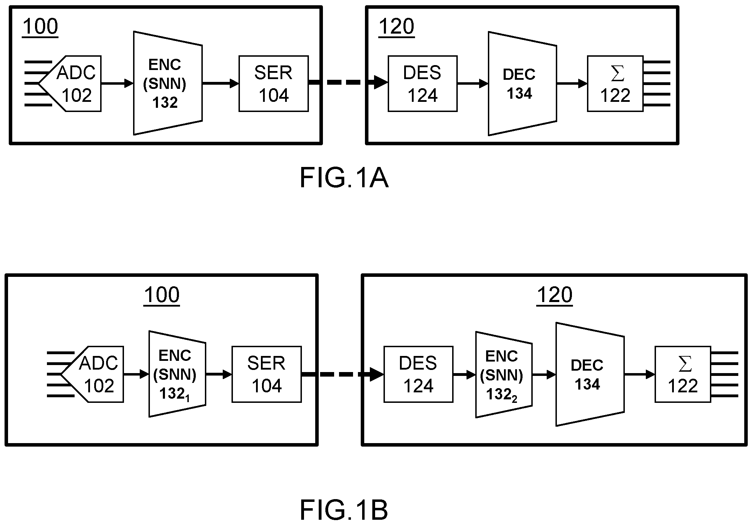

FIG.1A shows a sensor device 100 for encoding the data from a set of sensors. The sensor device 100 is therefore configured to receive input from the set of sensors. The set of sensors may comprise a plurality of sensors. The sensors may be arranged in an array, such as being regularly ordered in rows and/or columns in the array. However, it should be realized that the plurality of sensors in the set need not be arranged in any particular arrangement. The sensor device 100 may thus be connected to the sensors in the set for receiving the signals. Alternatively, the sensor device may be integrated with the sensors or may be separate from the sensors and configured to receive signals from the sensors through one or more wires. The sensor device may even be configured to receive signals from the one or more sensors using wireless communication with the one or more sensors. Further, the sensors in the set may all be of a same type or may be of different types. The set of sensors may for instance be configured to detect a biological signal, such as an electrical signal propagating through in a tissue, such as a nerve. Thus, the set of sensors may comprise electrodes configured to detect electrical signals from biological tissue. However, the set of sensors may comprise also other types of sensors, such as photo-sensitive elements configured to detect imaging information or an optical signal such as an intensity of incident light. The set of sensors may also comprise elements sensitive to a magnetic signal or a vibrational signal. Where beneficial, the sensors may be arranged in an array allowing a spatial resolution of the detected signals. Each sensor in the set may be identical, such that the sensors may be configured to detect a common type of signal, or, the sensors in the set may alternatively be of different types and thus detecting different type of signals of the monitored object or scene or of the different monitored objects or scenes, such as different parts of a body.

The received input may be provided to a plurality of analog-to-digital converters, ADCs, 102a, 102b, ..., 102n wherein each ADC 102a-n may be connected to a subset of sensors as detailed in the EP 23213959.2. The subset of sensors may comprise one sensor. However, the subset of sensors may comprise a plurality of sensors, such that the ADC 102a-n may receive input from the subset of sensors in a time-multiplexed manner. The ADCs 102a-n are configured to detect events in input signals received from the sensors. Thus, each ADC 102a-n may be configured to detect changes in a value of an analog signal from a sensor, wherein such a change may correspond to an event. The ADCs 102a-n may be configured as level-crossing ADCs, LC-ADCs, which are configured to detect whether a value of a signal is above an upper threshold or below a lower threshold set in relation to a previous value of the signal. However, it should be realized that the ADCs 102a-n may be configured to detect events in another manner, such as the ADCs 102a-n comprising a comparator which determines whether an event has occurred after the value of the signal has been converted to digital format. According to another alternative, the ADCs may be ADCs configured to operate at Nyquist rate, Nyquist-rate ADCs. The Nyquist-rate ADC may further be combined with a delta modulator such that the delta modulator provides an output only when a value of a signal input to the Nyquist-rate ADC changes.

The information outputted by the ADCs therefore characterises the detected events in a digital format. Depending on the type of ADCs used, this event information may be an indication of an observed change of the value of the signal, or, the event information may be provided as a direction of change of the value of the signal (up or down) and, optionally, a magnitude of the change. For example, a single bit may represent the observed change of the signal value or the direction of change, and a number of bits may represent the change in magnitude of the signal. In other words, the output of an ADC may for example be a single-bit signal with each bit representing a change in the value of the sensor signal, i.e., detected events, or a multi-bit signal with bit representing the signal from a sensor in a so-called delta-modulated format.

Thanks to the use of event information for representing information from the set of sensors, a data rate produced by the set of sensors may be reduced. Thus, values of the signal from the sensor may not be provided in each time instance. Rather, the signal from the sensor may only be represented when a change of the value of the signal occurs. This implies that the device may output a limited amount of data, such that data communication is limited. This is useful in limiting power consumption.

The sensor device 100 further comprises an encoder, ENC, 136 pre-trained to encode the event information provided by the ADCs 102a-102n. The ENC 132 comprises spiking neural network, eSNN, pre-trained to perform a lossless or low-less compression or encoding of the event information. The SNN 132 receives event information from the ADCs 102a-102n and derives or infers an encoded representation 133 therefrom. This implies that the sensor device may be configured to encode or compressed data from the same or different types of sensors, which may be configured to monitor a common or different objects or scenes of interest.

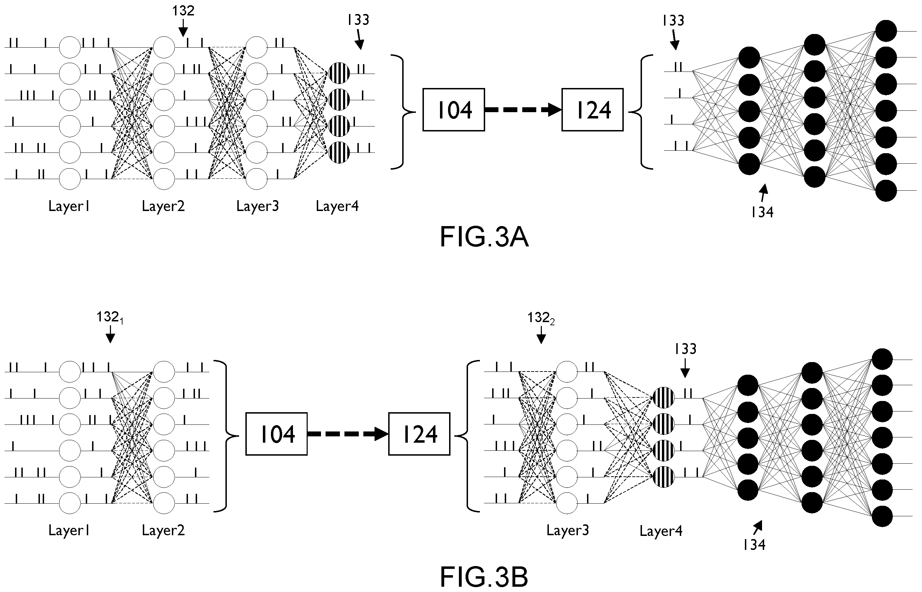

FIG.3A shows an example architecture of the encoding SNN, eSNN, 132. The eSNN 132 is a fully-connected neural network comprising an input layer 1, Layer 2, two hidden layers, Layer 2 and Layer 3, and an output layer, Layer 4. The eSNN may implement biological neuron learning models, such as an integrate-and-fire or a leaky integrate-and-fire, or any other suitable for the purpose models. In other words, the neurons in a respective layer are fully-connected to the neurons in both the preceding layer and the subsequent layer. However, the eSNN may have a partially-connected architecture. Depending on the type of sensors in the set and/or the type of information they acquire as well as their number, the eSNN may comprise more than two hidden layers. For example, it was observed that that two hidden layers are sufficient for ensuring lossless or low-less compression when the sensor device 100 is used to detect electrical signals from biological tissue. However, for other types of sensors such as an event camera one hidden layer may be sufficient, while for others more hidden layers may be required. In the example of FIG.3A, the output of the ADCs is fed to respective neurons in the input layer of the SNN 132. The neurons in the respective layers apply a linear or non-linear transformation to the received values from the ADCs in accordance with the learning model the eSNN implements. For example, if a bias is included in the leaky-integrate-and-fire model is, the neurons may apply a non-linear transformation. As a result, one or more neurons in a respective layer fire, i.e., each firing neuron generates a spike, which subsequently triggers the firing of neurons in the subsequent layers and thus to an output at the output layer of the eSNN, i.e., the encoded event information obtained from the sensors or the encoded representation 133.

For example, a fully-connected SNN 132 with 3 hidden layers with 128, 128 and 64 leaky-integrate-and-fire neurons in the respective hidden layers may be employed to encode the event information obtained by the sensor device as described in the EP 23213959.2, while a fully-connected RNN with 3-hidden layers with 64, 128 and 128 neurons in the respective layers can be used as the DEC 134. These SNN 132 and DEC 134 neural networks achieve an average of root mean square error among all channels is 4.76 µV which is lower than the noise in the obtained event information, 5.9 µV.

Returning back to FIG.1A, the sensor device 100 may comprise a serializer, SER, 104 for generating a data packet representing the information acquired by the set of sensors. The data packet may be configured to include encoded representation of the event information generated or inferred by the SNN. The data packet may thus comprise encoded representation of event information generated during a time frame. The sensor device 100 may thus be configured to continuously monitor input signals from the eSNN 132, in a sequence of time frames. Each time frame may correspond to a time duration during which one or more encoded representations are derived by the eSNN. Hence, during a first time frame, one or more encoded representations are derived by the eSNN 132 from events detected by the ADCs 102a-n receiving input from respective sensors. These detected events are then encoded by the eSNN which derives therefrom the encoded representation. Thus, a data packet may contain encoded event information acquired from different sensors during a time frame.

Alternatively, the SER 104 may be activated only when encoded representation is received. For instance, if the sensors are used for sensing a biological signal, the information in the sensed biological signal may be very sparse. For instance, if a neural signal is monitored by a sensor, the sensor may during a major portion of time detect a constant signal due to the sensor sensing no neural activity. Only during short periods of time, the sensor will sense activity in the biological signal. Thus, the device may be advantageously used for encoding of data from sensors that sense sparse signals, since the sensing of sparse signals may imply that there are events only in a small fraction of time frames. The low power consumption provided by the sensor device is particularly advantageous for packetizing of data when power supply is limited. Thus, if the set of sensors are used in an implanted or wearable system, power consumption may be very limited. This implies that the device is particularly suited for such applications, providing a long lifetime of an implanted or wearable device.

To ensure efficient transferred of the one or more encoded representations from the edge device 100 to an external device, such as an edge gateway device 120, and therefore to guarantee a low latency data transmission, the eSNN architecture should be chosen such that the number of neurons in its output layer does not exceed the capacity of the SER 104. This will ensure that the encoded representation at the output of the eSNN 132 can be packed by the SER 104 and transferred to the external device.

The sensor device 100 may further be configured to communicate with the external device 120, i.e., the edge gateway device 120, over a short range. Thus, the sensor device 100 may provide direct communication with the edge gateway device 120 using wired communication or short-range wireless communication. This may ensure that a time required for the transfer of the data packet from the sensor device 100 to the edge gateway device 120 may always be the same or substantially the same. Hence, the sensor device 100 may not need to provide a time stamp for the data packet. Rather, the data packets may be immediately transmitted to the edge gateway device 120, which may then be able to relate the data packets in time to each other based on a time of receipt of the data packets. This implies that no clock synchronization between the sensor device 100 and edge gateway device 120 is needed and allows an internal clock generator (not shown in the figure) to generate the clock signal intermittently without a need of knowing a time that has passed between generation of sequential data packets.

The sensor device 100 may further comprise a memory (also not shown in the figured). The use of memory implies that bigger data packets may be used for communicating information acquired from longer time frames. Thus, using the memory, the device may be configured to generate fewer but bigger data packets. Since each data packet may need header(s) and general information, the use of smaller data packets may imply that less information is communicated from the sensor device. However, the memory takes up physical space of the device. Thus, if the device needs to be as small as possible, the memory may be omitted. In such case, the device is configured to packetize the encoded representation and to output a data packet to an external device in real time after the data packet has been generated. This implies that the external device may receive the data packets in real time. Thus, the external device may associate a timing of an event detected by a sensor with a time point of receipt of the data packet. The data packet need not comprise a time stamp and a clock of the device for packetizing of data need not be synchronized with a clock of the external device. This implies that complexity of achieving clock synchronization between the plurality of sensors and a receiving external device may be avoided.

The sensor device 100 may be implemented as an integrated circuit. In particular, the device 100 may be implemented as an Application-Specific Integrated Circuit, ASIC, or a Field-Programmable Gate Array, FPGA. However, it need not be necessarily implemented in a single integrated circuit. The sensor device 100 may comprise two or more integrated circuits, with its components distributed over the two or more integrated circuits.

The sensor device 100 may be arranged in a common housing with the set of sensors. The sensor device 100 may alternatively be arranged in a separate housing from the set of sensors, wherein the sensor device 100 is arranged to receive signals directly through a wired connection from the set of sensors. The sensor device 100 is preferably arranged close to the set of sensors in order to ensure that signals from the set of sensors may be transferred a short distance between the set of sensors and the ADCs 102a-n. This implies that power consumption for transfer of signals may be low.

Further, the sensor device 100 may be arranged in a housing having limited power capacity, such as being powered by a battery. This may especially be needed as the sensor device 100 may be arranged close to the set of sensors or even integrated with the set of sensors. Therefore, the intermittent operation of the sensor device 100 ensured by means of a clock generator may be highly advantageous, since low power consumption of the sensor device 100 may be very important for ensuring a long lifetime of the device.

Further, the housing of the sensor device 100 may be such that allows the sensor device to be worn or to be arranged close to the set of sensors allowing wired transfer or short-range wireless transfer of signals from the set of sensors to the device 100. This may be important for instance, when the sensor device 100 is configured to detect a biological signal, and when the set of sensors 10 may need to be worn or implanted in a body of a human or animal being.

FIG.1A further shows an edge gateway device 120 for decoding the data from the set of sensors. The edge gateway device 120 is therefore configured to receive a data packet from the sensor device 100. The data packet may be provided to a deserializer, DES, 124 for unpacking the data packet and thus to extract the one or more encoded representations 133 therefrom. The DES 124 therefore has the same but reverse functionality of the SER 104.

The edge gateway device 120 further comprise a decoder, DEC, 134, for decoding event information from the encoded representation. The DEC 134 is thus configured to receive the encoded representation 133 from the DES 124 and to decode or to infer the event information therefrom. The DEC 134 may be a deep neural network, dNN, pre-trained for decoding the event information such as a feedforward neural network, FNN, a convolutional neural network, CNN, or a recursive neural network, RNN, such as a gated recurrent unit-based neural network, GRU, or a Long short-term memory, LSTM neural network. Alternatively, the DEC 134 may be a spiking neural network, dSNN which may implement a biological neuron learning model, such as an integrate-and-fire or a leaky integrate-and-fire or another suitable for the purpose model.

FIG.3A further shows an example architecture of the DEC 134. In this example, the DEC 134 is a decoding deep neural network comprising three fully-connected layers, i.e., an input layer, a hidden layer, and an output layer. Similarly to the ENC 136, depending on the type of sensors in the set and/or the type of information they acquire as well as their number, the DEC 134 may comprise more than one hidden layer. In the example of FIG.3A, the encoded representation 133 is fed to respective neurons in the input layer of the decoding neural network 134. As shown in the figure, values of the encoded representation are fed to respective neurons in the input layer of the decoding neural network 134. The neurons in the respective layers apply a linear or a non-linear transformation to the received values in accordance with the learning model. As a result, one or more neurons in the layer fire which subsequently triggers the firing of neurons in the subsequent layers and thus to an output at the output layer of the DEC representing the event information obtained from the sensors.

The edge gateway device 120 may further comprise a summator 122 configured to reconstruct the data acquired by the sensors. For example, if the event information represents a change in the value of a sensor, the summator will reconstruct the changes observed by the various sensors. If the event information represents the direction of the change as well as the magnitude of the change, the output of the summator 122 will be the signals as acquired by the various sensors. Therefore, the summator 122 is configured to receive the event information and to reconstruct it to detected events.

Similarly to the sensor device 100, the edge gateway device 120 may be implemented as one or more integrated circuits, such as one or more Application-Specific Integrated Circuits, ASIC, and/or a Field-Programmable Gate Arrays, FPGA. That is, the edge gateway device 120 may be implemented in a single integrated circuit with its components distributed over the two or more integrated circuits.

The edge gateway device 120 may be arranged in housing and which may be such that allows the edge gateway device 120 to be worn or to be arranged close to the sensor device 100 allowing a short-range wireless transfer of signals from the device 100. This implies that power consumption for transfer of signals may be low. This may be important for instance, when the sensor device 100 is configured to detect a biological signal, e.g. when it is implanted in a body of a human or animal being, and when the edge gateway device 120 may need to be worn on the body of a human or animal being.

According to embodiments, the ENC 132 may be implemented in a distributed architecture. In other words, the use of encoding neural network allows for distributed encoding computation. Since each layer of eSNN 132 transfers information via spikes, the encoding computation of the event information can be easily split. FIG.1B and FIG.3B show an example where the eSNN 132 is split into two sub-sections, with its first sub-section 132₁ comprising the layers corresponding to the Layer 1 and Layer 2 of the eSNN of FIG.3A and remaining on the edge device 100, and its second, residual sub-section 132₂, comprising the remaining layers of the eSNN 132, i.e., Layer 3 and Layer 4, now integrated in the edge gateway device 120.

It should be noted that depending on the architecture of the sensing system, the encoding computation may be split differently. For example, there may be an intermediate device configured to further encode the partially encoded event information from the sensor device 100 and to communicate it to the edge gateway device 120. Further, the split of the encoding SNN 132 may be configured in accordance with the energy required by the sensor device 120 and possibly the intermediate device for the data transmission so that the overall energy consumption by the respective device 100 satisfies the energy requirements.

Employing distributed architecture allows for further reduction of the area of sensor device 100. Further, employing a distributed architecture may also be beneficial when the event information is very sparce, i.e., event information is obtained at much larger time intervals. In such cases, a SNN with fewer layers may be sufficient to achieve sufficient compression ratio while meeting the stringent power consumption requirement. To maximize the benefits of sparse event information, the sensor device 100 may be manufactured using >=65 nm semiconductor technology to avoid leak currents in the sensor device

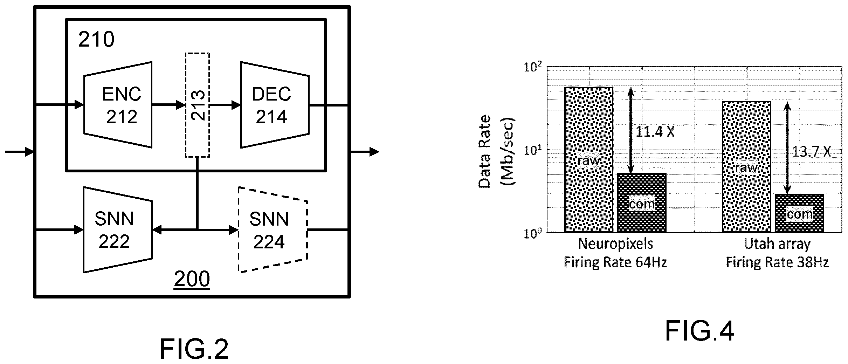

The training of the ENC 132 and the DEC 134 will be now explained in detail with reference to FIG.2, wherein FIG.2 shows a neural network training system 200 according to an example embodiment of the present disclosure. The training system 200 comprises an encoder-decoder neural network 210 and a SNN 222. The encoder-decoder neural network 210 is a type of deep neural network that performs a sequence-to-sequence transformation. The encoder 212 and decoder 214 may comprise a deep neural network, dNN, such as a feedforward neural network, FNN and a convolutional neural network, CNN, or, a recursive neural network, RNN, such as a gated recurrent unit-based neural network, GRU, and a Long short-term memory, LSTM neural network. As the name suggests, the encoder-decoder neural network 210 comprises an encoder neural network 212 and a decoder neural network 214. Both the encoder and decoder comprise several layers of neurons, such as an input layer, two or more hidden layers, and an output layer. Each neuron in a respective layer is configured to weigh the data at its output in accordance with the weight associated with the neuron. As a result, every layer of neurons performs a transformation of the data at its input and thus every layer of neurons trains based on the data from the previous layer's output. That is, the encoder transforms the input data into a different representation, often called a latent vector 213. The decoder 214 then takes the latent vector 213 as the input and expands it to a same or different format depending on the required functionality.

The architecture SNN 222 may correspond to the encoder neural network 132 of FIG.1A and FIG.1B, while the architecture of the decoder neural network 214 may correspond to decoder 134 of FIG.1A or FIG.1B. In other words, the SNN 222 and the decoder 214 are replicas of the SNN 132 and the decoder 134 of FIG.1A or FIG.1B, respectively.

Similarly to the encoder-decoder neural network 210, the SNN 212 is a type of a deep neural network that performs a sequence-to-sequence transformation. The SNN may implement biological neuron learning models, such as an integrate-and-fire or a leaky integrate-and-fire, or any other suitable for the purpose models. The SNN is a fully- or partially- connected neural network that comprises several layers of neurons, such as an input layer, two or more hidden layers, and an output layer. Each neuron in a respective layer is configured to generate an event, typically called as a firing or spiking, by performing a neuro-synaptic operation. The type of neuro-synaptic operation depends on the learning model implemented by the SNN. An event may be therefore generated automatically upon performing a neuro-synaptic operation. Alternatively, generating an event by a neuron may be done when a predefined condition is met. For example, such a predefined condition may be based on an accumulation of input data over a certain time interval. An accumulated value may, for example, comprise a sum of past input data values received during the time interval. A neuron may be configured to fire when such an accumulated value reaches a predefined threshold. That is, a neuron performs may perform weighting as well as an accumulation and a comparison operation. As a result, every layer of neurons performs a non-linear transformation of the data at its input. Similarly to the encoder-decoder neural network 210, the SNN 212 also transforms the input data into a different representation, which is also called a latent vector 213.

In the present case, both the encoder-decoder neural network 210 and the SNN 222 are trained to perform a lossless or low-less compression or encoding of event information. Both the encoder-decoder neural network 210 and the SNN 222 are trained using a set of training sequences, i.e., a set of training event information. The training sequences may comprise event information obtained from one or more sensors at various time instances. Further, the training sequences may comprise event information obtained using same or similar type set of sensors as in FIG.1A or FIG.1B. Alternatively, the training sequences may comprise event information from benchmark training datasets, such as electrophysiological signals from the mouse brain (https://zenodo.org/records/14449576?preview=1&token=eyJhbGciOiJlUzUxMiJ9.eyJpZCl6ImQxODJI NTUOLWVmMzctNDliMS1hMmEzLTI0N2E4OWZkNWNhNilslmRhdGEiOnt9LCJvYW5kb20iOil5ZDVj NmU5MDE5NTc1MzdlYzY3YmRmODY1NTg1Zjc0ZCJ9.IxfxlGe8jaeK2K4nh699C9Wkg08ogySEqoZj 2X-vFH2SpgsEbBeNVdQIZSwJjYcSRt8OYScK8hsjGMWvA449A). The encoder-decoder neural network 210 and the SNN 222 may be trained by means of a supervised or unsupervised training, i.e., the event information used for training may be labelled or not. For example, the training event information may be provided by the ADCs 102 of FIG.1A or FIG.1B and then labelled if supervised training is desired.

In the case the unsupervised training, at each step of the training, the encoder 212 encodes or compresses a training sequence from the set to derive a latent vector therefrom, i.e., an encoded representation 213 which is a lower dimensional representation of that sequence. The decoder 214 decodes or uncompresses the obtained encoded representation 213 to derive or reconstruct the training sequence. A loss function such as (root) mean square error, mean absolute error, cross-entropy or other loss functions can be used to derive a reconstruction error by comparing the original training sequence and its reconstructed version. The derived reconstruction error is then used to penalize the encoder-decoder neural network 210 by modifying the weights associated with the neurons in different layers. That is, the weights associated with neurons in one or more layers of encoder and/or the decoder neural networks may be modified. The above training procedure is performed using the training sequences in the set and until the reconstruction error reaches a desired reconstruction error to conclude the training of the encoder-decoder neural network 210.

The encoder-decoder neural network 210 may be configured to achieve a compression ratio of 4 to 15X depends on the datasets, neural network architecture, and the required reconstruction accuracy. The compression ratio and in turn the reconstruction error may be tuned by adjusting the size of the encoded representation or latent vector, or in other words by modifying the architecture of the encoder and the decoder, i.e., by changing the number of hidden layers and/or by changing the number of neurons in the layers. However, it needs to be bear in mind, that reconstruction error increases with decreasing of the encoded representation. Thus, a balance needs to be made between the desired compression ratio and the reconstruction error.

After completing the training of the encoder-decoder neural network 210, the latent vector 213 and the set of training sequences is used to train the SNN 222. The same training procedure as above is followed. That is, at each step of the training, the SNN encodes or compresses a training sequence from the set to derive or an encoded representation again a lower dimensional representation of the training sequence. A loss function such as a (root) mean square error, mean absolute error, cross-entropy or other loss functions can be used to derive a reconstruction error by comparing this derived encoded representation with latent vector derived from the encoder-decoder neural network 213. The derived reconstruction error is then used to penalize the SNN 222 by modifying the conditions at which one or more neurons in the different layers are firing or spiking. Again, the training procedure is performed using the training sequences in the set and until the reconstruction error reaches a desired reconstruction error to conclude the training of the SNN 212.

Once the training of the SNN 222 is completed, the SNN 212 is deployed on the edge device 100, i.e., the conditions at which the various neurons in the ENC 132 will be used to programme a replica SNN 132 deployed or integrated on the edge device 100. In other words, the SNN on the edge device will be programmed using the configuration parameters associated with the respective neurons in the SNN 222. This completes the training procedure for the SNN 132 on the edge device 100. The sensor device 100 can then operate as described above with reference to FIG.1A and FIG.1B.

At the same time or subsequently, the decoder neural network 214 is deployed on the edge gateway device 110, i.e., the weights associated with the different neurons in the DEC 214 will be used to programme the replica DEC 134 deployed or integrated on the edge gateway device 120. In other words, the DEC 134 on the edge gateway device will be programmed using the configuration parameters associated with the respective neurons in the DEC 214. This completes the training procedure for the DEC 134 on the edge gateway device 100 and the device 120 can then operate as described above with reference to FIG.1A and FIG.1B.

The neural network training system 200 may further comprise a further SNN 224 trained to perform a decompression or decoding of event information from the encoded representation derived from the ENC neural network 212. This decoding SNN 224 may comprise the same or different architecture as the SNN 212 trained to perform lossless or low-less compression. The SNN 224 may be configured to implement the same or different learning model as the SNN 212. To that end, the decoding SNN 224 may be a replica of the decoder neural network 134 of FIG.1A and FIG.1B. In other words, both the sensor device and the edge gateway device of FIG.1A or FIG.1B may comprise a SNN for encoding and for decoding, respectively.

The decoding SNN 214 is trained using the same training procedure as above. That is, at each step of the training, the SNN 214 decodes or decompresses the encoded representation to derive or reconstruct the training sequence therefrom. A loss function such as a (root) mean square error, mean absolute error, cross-entropy or other loss functions is used to derive a reconstruction error by comparing the reconstructed training sequence with the original training sequence. The derived reconstruction error is then used to penalize the decoding SNN 224 by modifying the conditions at which one or more neurons in the different layers are firing or spiking. Again, the training procedure is performed using the training sequences in the set and until the reconstruction error reaches a desired reconstruction error to conclude the training of the SNN 224.

Once the training is completed, the SNN 224 is deployed on the edge gateway device 120 by programming the DEC 134 on the edge gateway device 102 using the configuration parameters associated with the respective neurons in the SNN 224. The sensor device 100 can then operate as described above with reference to FIG.1A and FIG. 1B.

According to an embodiment, the devices 100 and 120 may operate in three modes, i.e., a training mode, a normal mode, and a calibration mode.

During the training mode, the sensor device 100 is configured to transmit the detected by the ADCs events via the SER 104. The event information is thus packeted by the SER 104 without being encoded by the SNN. The packaging of the event information may be done using the packaging method as detailed in the EP 23213959.2. Further, the gateway device 120 is configured to receive the transmitted packets which are depacketized by the DES 124. Again, this is done by the DES 124 performing the same but reverse functionality. The unpacked event information is then used to train the eSNN 132 and possibly the dSNN 134 as detailed above with reference to FIG.2.This implies that the edge gateway device 120 comprises the neural network training system of FIG.2. Alternatively, the edge gateway device may be in communication with the neural network training system via a wired or a wireless connection.

Once the training of the encoding neural network 222 and decoding neural network 214 or 224 is completed, the sensor device 100 and the edge gateway device 120 are configured to operate in a normal mode. In this case, the sensor device 100 is configured to detect events, encode the detected events into encoded representation and to packetize them and the edge gateway device 120 is configured to receive and depacketized the encoded representation and to decode the events therefrom as detailed above with reference to FIG.1A.

During a calibration mode, the sensor device 100 is configured to transmit the evets detected by the ADCs as well as the encoded representation derived by the eSNN. In this case, the SER 104 is configured to packet both the output of ADCs and the eSNN, 132. Correspondingly, the edge gateway device 120 is configured to receive, depacketized both the detected events and the encoded representation and decode the encoded representation. The calibration mode allows the sensor device 100 and the edge gateway device 120 to be pre-trained using one or more benchmark training data sets and then re-trained when set to monitor the object or scene of interest using actual data.

FIG.4 shows simulation results illustrating the compression ratio achieved with the eSNN 132 of FIG.3A. The compression ratio achieved with the discloses approach was tested using two benchmark datasets, i.e., one dataset obtained using a neuro-pixels sensor array with a 64Hz firing rate and another dataset obtained using a Utah sensor array with a 38Hz firing rate. As it can be seen, the eSNN 132 achieves compression ratio of 11.4 and 13.7, respectively. The density of electrodes of the sensors, their recording locations in the brain, the ADC resolution, etc. are all different in these two datasets. These results from different datasets show that the encoding and decoding method according to the present disclosure is suitable for datasets from different hardware system and recording conditions.

As has been shown in the above examples, by arranging the SNN and the encoder-decoder neural network in a student-teacher configuration, a lightweight SNN can be easily trained to perform lossless or low-less and content-agnostic compression of the event information where underlying statistical distribution of the event information is not available. The use of student-teacher configuration further enables leveraging of the sparsity nature of the event information which may be represented as a spike signal, or, as the delta-modulated signal. Employing such SNN allows balancing the compression ratio and power consumption in accordance with the constraints of the specific use case while considering the hardware, computational and communication resources of the sensor or edge and/or the edge gateway devices. The SNN further allows distributing the compression between the edge and the edge gateway devices offering another degree of freedom when trading-off between computation and communication resources required by the either of the devices. The present invention thus allows a lightweight SNN integration in sensor edge devices to handle large data in a resource-constrained environment where the power, area and computing resources are highly constraint.

Further, the present invention may advantageously combine with state-of-the-art communication techniques, such as a body channel communication, BCC, which is a communication solution that uses highly conductive material, animal bodies, to transfer signals. BCC can achieve both high data rates and low power consumption. Employing the proposed compression solution in sensor edge devices with state-of-the-art communication solutions makes these devices even more appropriate for implantable applications.

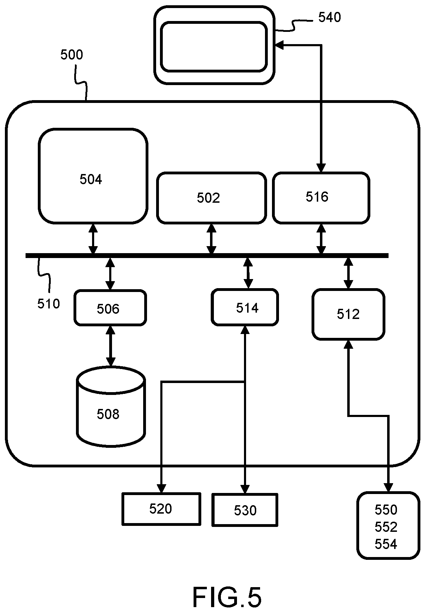

Embodiments of the present disclosure can be performed by means of a computing system programmed to perform various steps of the above-described methods or the above-described functionalities of the sensor device, edge gateway devices and/or the neural network training system. The computing system can for example comprise at least one processor and at least one memory. The at least one memory stores program code which comprises computer-executable instructions which together with the at least one processor cause the computing system to perform the above-described embodiments. In other words, computing system may, serve as a partial or full implementation of the sensor device 100, the edge gateway device 120, and/or the training system 130, and, the training methods can be entirely implemented as computer-implemented methods. An example of such computing system is shown in FIG.5. As shown in the figure, the computing system 500 may, in general, be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 604 may include a random-access memory, RAM, or another type of dynamic storage device that stores information and instructions for execution by processor 502 and/or read-only memory, ROM, or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with other computing devices 550, 552, 554. The communication interface 512 of computing system 500 may be connected to such another computing system by means of a local area network, LAN, or a wide area network, WAN, such as for example the internet. Storage element interface 506 may comprise a storage interface such as for example a Serial Advanced Technology Attachment, SATA, interface or a Small Computer System Interface, SCSI, for connecting bus 610 to one or more storage elements 508, such as one or more local disks, for example, SATA disk drives, and control the reading and writing of data to and/or from these storage elements 508. Although the storage element(s) 608 above is/are described as a local disk, in general, any other suitable computer-readable media such as a removable magnetic disk, optical storage media such as a CD or DVD, -ROM disk, solid-state drives, flash memory cards, ... could be used.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for training a learning model for encoding event information by means of a learning system comprising a spiking neural network, SNN, (132; 132₁-132₂), the method comprising:
- obtaining event information characterizing one or more events each corresponding to a change in a value of a sensor from a set of sensors;
- deriving encoded representation (133, 213) from the obtained event information by means of an encoder-decoder neural network (210); and
- training the SNN (132; 132₁-132₂) for encoding the event information by means of the obtained event information and the derived encoded representation (133, 213).

2. The computer-implemented method according to claim 1, wherein the encoder-decoder neural network (210) and the SNN (132; 132₁-132₂) form a teacher-student neural network.

3. The computer-implemented method according to any of the preceding claims, wherein the deriving comprises training the encoder-decoder neural network (210) using the obtained event information and wherein the encoder-decoder neural network (210) comprises a deep neural network, dNN, such as a feedforward neural network, FNN and a convolutional neural network, CNN, or, a recursive neural network, RNN, such as a gated recurrent unit-based neural network, GRU, and a Long short-term memory, LSTM neural network.

4. The computer-implemented method according to any of the preceding claims, wherein the SNN (132; 132₁-132₂) comprises at least one hidden layer and wherein the SNN (132; 132₁-132₂) implements an integrate-and-fire model or a leaky integrate-and-fire model.

5. The computer-implemented method according to any of one of claims 1 to 4, further comprises deploying the trained SNN (222; 132; 132₁-132₂) to a sensor device (100) and a trained decoder neural network (214) of the encoder-decoder neural network (210) to an edge gateway device (120), wherein the deploying comprises obtaining configuration parameters characterizing the trained SNN and the trained decoder neural network and programming a replica SNN deployed on the sensor device (100) and a replica decoder neural network (134) deployed on the edge gateway device (120) with the obtained configuration parameters.

6. The computer-implemented method according to any of one of claims 1 to 5, further comprises deploying a first portion of the trained SNN (132₁) to a sensor device (100) and a remaining portion of the trained SNN (132₂) and a trained decoder neural network (214) of the encoder-decoder neural network (210) to an edge gateway device (120), wherein the deploying comprises obtaining configuration parameters characterizing the trained SNN and the trained decoder neural network and programming a replica of the first portion of SNN deployed on the sensor device (100) and a replica of the remaining portion of the SNN and a replica decoder neural network (134) deployed on the edge gateway device (120) with the obtained configuration parameters.

7. A computer-implemented method comprising obtaining event information characterizing one or more events each corresponding to a change in a value of a sensor from a set of sensors and inferring therefrom encoded representation by means of an SNN (132; 132₁-132₂) pre-trained by means of the method according to any one of claims 1 to 6.

8. A computer-implemented method for training a learning model for decoding event information by means of a learning system comprising a spiking neural network, SNN, (134), the method comprising:
- obtaining event information characterizing one or more events each corresponding to a change in a value of a sensor from a set of sensors;
- deriving encoded representation (133, 213) from the obtained event information by means of an encoder-decoder neural network (210); and
- training the SNN (134) for decoding the encoded representation by means of the obtained encoded representation (133, 213) and the derived event information.

9. The computer-implemented method according to claim 8, wherein the encoder-decoder neural network (210) and the SNN (134) form a teacher-student neural network.

10. The computer-implemented method according to any one of claims 8 to 9, wherein the deriving comprises training the encoder-decoder neural network (210) using the event information, and, wherein the encoder-decoder neural network (210) comprises a deep neural network, dNN, such as a feedforward neural network, FNN and a convolutional neural network, CNN, or, a recursive neural network, RNN, such as a gated recurrent unit-based neural network, GRU, and a Long short-term memory, LSTM neural network.

11. The computer-implemented method according to any one of claims 8 to 10, wherein the SNN (134) comprises at least one hidden layers and wherein the SNN (134) implements an integrate-and-fire model or a leaky integrate-and-fire model.

12. The computer-implemented method according to any one of claims 8 to 11, further comprises deploying the trained SNN (134) to an edge gateway device (120), wherein the deploying comprises obtaining configuration parameters characterizing the trained SNN (134) and programming a replica SNN on the edge gateway device (120) with the obtained configuration parameters.

13. A computer-implemented method comprising obtaining encoded representation of event information characterizing one or more events each corresponding to a change in a value of a sensor from a set of sensors; and inferring therefrom the event information by means of a SNN (134) pre-trained by means of the method according to any one of claims 8 to 12.

14. A sensor device (100) comprising a spiking neural network, SNN, (132; 132₁-132₂) pre-trained by means of the method according to any one of claims 1 to 6 and configured to receive event information characterizing one or more events each corresponding to a change in a value of a sensor from the set of sensors and to infer encoded representation of received event information.

15. The sensor device according to claim 14, wherein the SNN (132₁) is pre-trained according to the method of claim 6 to partly encode the received event information.

16. An edge gateway device (120) comprising a decoder neural network, DNN, (134) pre-trained by means of the method according to any one of claims 1 to 6 or a SNN (132) pre-trained by the method according to any one of claims 8 to 12 and configured to receive encoded representation of event information characterizing one or more events each corresponding to a change in a value of a sensor from a set of sensors from and to infer the event information encoded therein.

17. The edge gateway device (120) according to claim 16, further comprising a SNN (132₂) pre-trained by means of the method according to claim 6 and configured to receive partly encoded representation of the event information and to output the encoded representation of the event information.

18. A neural network training system comprising at least one processor and at least one memory including computer program code, the at least one memory and computer program code configured to, with the at least one processor, cause the neural network training system to perform the computer-implemented method according to any one of claims 1 to 6 or the computer-implemented method according to any one of claims 8 to 12 when the computer program code is run on the neural network training system.

19. A computer program product comprising computer-executable instructions for causing at least one computer to perform the method according to any one of claims 1 to 7 or the method according to any one of claims 8 to 13 when the program is run on the at least one computer.

20. A computer readable storage medium comprising the computer program product according to claim 19.
